# EUROPEAN PATENT APPLICATION

(11) **EP 1 619 576 A1**
(43) Date of publication of application: **25.01.2006**
(21) Application number: 04017556.4
(22) Date of filing: 23.07.2004
(51) Int. Cl.: G06F 1/16, A45C 3/02

(54) **Tablet PC assembly**

(71) Applicant: VAC Corporation, Taipei (TW)
(72) Inventor: Chen, Yi-Sung, Taipei (TW)
(74) Representative: Viering, Jentschura & Partner

(57) **Abstract**

A tablet PC assembly has a foldable sheath (1) with an operation plate (10), a brace plate (11) connected to the operation plate, an inner supporting device, a first electrical connector and an outer supporting device (14). The inner supporting device and the first electrical connector are disposed on an inner surface of the brace plate, and the outer supporting device is disposed on an outer surface of the brace plate. A keyboard (2) is mounted on an inner surface of the operation plate, and electrically connects to the first electrical connector on the inner surface of the brace plate. A tablet PC (3) has a second electrical connector electrically connecting to the first electrical connector on the inner surface of the brace plate, and is arranged on the inner supporting device on the inner surface of the brace plate in a detachable manner.

## Description

### BACKGROUND OF THE INVENTION

### 1. Field of the Invention

The present invention relates to a tablet PC, and particularly relates to a tablet PC assembly.

### 2. Background of the Invention

A conventional tablet PC, like a conventional notebook, is light and small in size, and provides portability for those who need it, such as students, and businessmen. The conventional tablet PC has many abilities, and, for example, can function as a notebook, surf the Internet, and receive e-mail. Information can be input into the conventional tablet PC by a touch pen or an external keyboard.

The conventional tablet PC includes a touch-sensitive screen, the touch pen and a connection port. The touch pen can be used to directly write on the touch-sensitive screen. The external keyboard is connected to the connection port of the tablet PC by an external cable. The external cable, the external keyboard and the tablet PC must be stored, respectively; when the tablet PC is reset, this is inconvenient for a user. In addition, the external keyboard is expensive and instable.

### SUMMARY OF INVENTION

The primary object of the invention is therefore to specify a tablet PC assembly including a keyboard for easy portability.

The secondary object of the invention is therefore to specify a tablet PC assembly with a cheap but stable keyboard.

According to the invention, these objects are achieved by a tablet PC assembly that includes a foldable sheath including an operation plate, a brace plate connecting the operation plate, an inner supporting device, a first electrical conjunction and an outer supporting device. The inner supporting device and the first electrical conjunction are disposed on an inner surface of the brace plate, and the outer supporting device is disposed on an outer surface of the brace plate. A keyboard is mounted on an inner surface of the operation plate, and is electrically connected to the first electrical conjunction on the inner surface of the brace plate. A tablet PC includes a second electrical conjunction electrically connecting the first electrical conjunction on the inner surface of the brace plate, and arranged on the inner supporting device on the inner surface of the brace plate in a detachable manner.

To provide a further understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention that will be described hereinafter and which will form the subject of the claims appended hereto.

### BRIEF DESCRIPTION OF THE DRAWINGS

These and other features, aspects, and advantages of the present invention will become better understood with regard to the following description, appended claims, and accompanying drawings, where:
Fig. 1 is an exploded view according to a tablet PC assembly of the present invention;
Fig. 2 is perspective view according to the tablet PC assembly when the tablet PC assembly is unfolded;
Fig. 3 is a side view according to the tablet PC assembly when the tablet PC assembly is in use;
Fig. 4 is a side view according to another embodiment of the tablet PC assembly when the tablet PC assembly is in use; and
Fig. 5 is a side view according to the tablet PC assembly when the tablet PC assembly is folded.

### DETAILED DESCRIPTION OF THE EMBODIMENTS

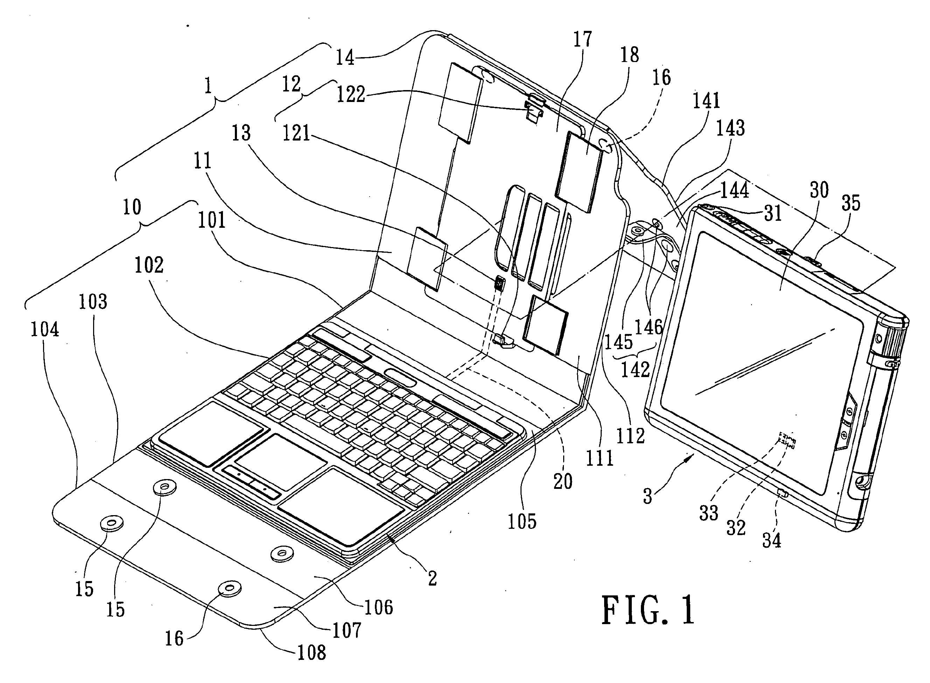

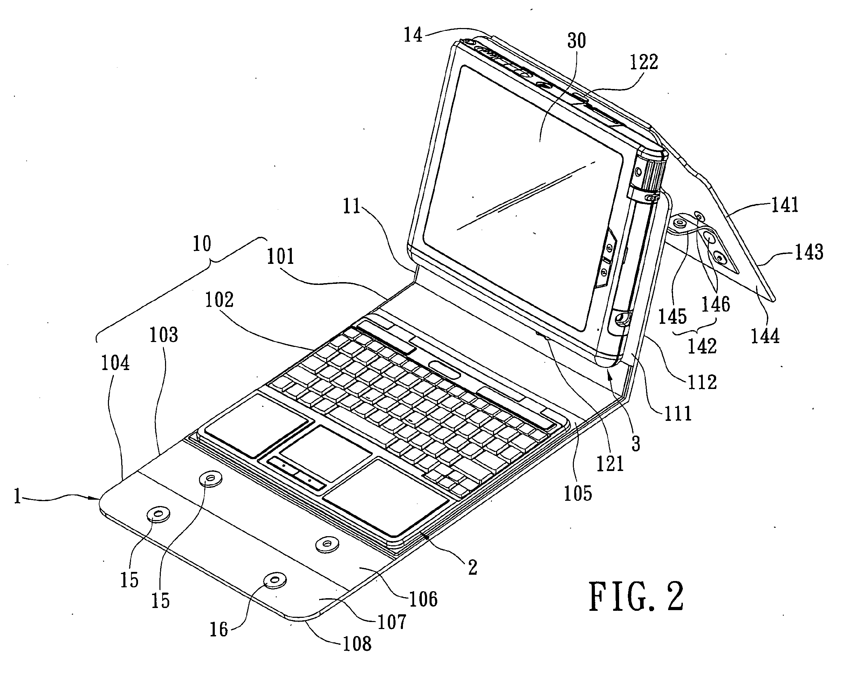

Referring to Figs. 1 and 2, the present invention provides a tablet PC assembly that includes a foldable sheath 1, a keyboard 2 and a tablet PC 3.

The foldable sheath 1 includes an operation plate 10, a brace plate 11 connecting the operation plate 10, an inner supporting device 12, a first electrical conjunction 13 and an outer supporting device 14. The operation plate 10 of the foldable sheath 1 includes a middle portion 101, a mounting portion 102, a foldable portion 103 and a clamping portion 104. The middle portion 101 is connected between the brace plate 11 and the mounting portion 102. The mounting portion 102 is connected between the middle portion 101 and the foldable portion 103. The foldable portion 103 is connected between the mounting portion 102 and the clamping portion 104. The foldable sheath 1 includes a first engaging mechanism 15 arranged on an inner surface 106 of the foldable portion 103 and an inner surface 107 of the clamping portion 104, and a second engaging mechanism 16 disposed on an outer surface 112 of the brace plate 11 and the inner surface 107 of the clamping portion 104. The inner surface 107 of the clamping portion 104 connects the first engaging mechanism 15 and the second engaging mechanism 16 simultaneously. In this embodiment, the first engaging mechanism 15 and the second engaging mechanism 16 are magnetic. The inner supporting device 12 and the first electrical conjunction 13 are disposed on an inner surface 111 of the brace plate 11. In this embodiment, the foldable sheath 1 further includes an orientation plate 17 connecting to the inner surface 111 of the brace plate 11 of the foldable sheath 1 via a connection member 18, and the inner supporting device 12 is disposed on the orientation plate 17. The inner supporting device 12 of the foldable sheath 1 includes a hook 121 and a press button 122. The outer supporting device 14 is disposed on an outer surface 112 of the brace plate 11. In this embodiment, the outer supporting device 14 of the foldable sheath 1 includes an exterior plate 141 and a retractable assembly 142. The exterior plate 141 includes a first surface 143 adjacent to the inner surface 111 of the brace plate 11, and a second surface 144 opposing the first surface 143 and adjacent to the outer surface 112 of the brace plate 11. The second engaging mechanism 16 is disposed on the outer surface 112 of the brace plate 11 and the first surface 143 of the exterior plate 141. The retractable assembly 142 is connected between the second surface 144 of the exterior plate 141 on the outer surface 112 of the brace plate 11. The retractable assembly 142 includes a band 145 and a part-to-orientation mechanism 146. The band 145 has two ends connecting the second surface 144 of the exterior plate 141 and the outer surface 112 of the brace plate 11, respectively. The part-to-orientation mechanism 146 is disposed on the band 145 and the second surface 144 of the exterior plate 141. In this embodiment, the part-to-orientation mechanism 146 is magnetic.

The keyboard 2 is secured to an inner surface 105 of the mounting portion 102 of the operation plate 10 via screws or the like. Thus, the foldable sheath 1 is formed. The keyboard 2 includes a cable 20 electrically connecting the first electrical conjunction 13 of the inner surface 111 of the brace plate 11. The cable 20 penetrates through the operation plate 10 of the foldable sheath 1. and the brace plate 11.

The tablet PC 3 is arranged on the inner supporting device 12 on the inner surface 111 of the brace plate 11 in a detachable manner. The tablet PC 3 includes a touch-sensitive screen 30 arranged on a front surface thereof, a touch pen 31, a second electrical conjunction 33 electrically connecting the first electrical conjunction 13 on the inner surface 111 of the brace plate 11 and a conjunction wrapper 32 pivoted to the rear surface thereof to cover the second electrical conjunction 33 that is disposed on the rear surface of the tablet PC 3. In this embodiment, the tablet PC 3 further includes a recess 34 formed on a bottom edge thereof and a clasp member 35 disposed on the rear surface thereof; the hook 121 engages with the recess 34, and the press button 122 latches with the clasp member 35.

When the touch pen 31 is used, the tablet PC can be provided individually. When the keyboard 2 is used, the conjunction wrapper 32 and the clasp member 35 of the tablet PC 3 will be opened first, the tablet PC 3 can be placed on the brace plate 11 of the foldable sheath 1, and the hook 121 of the inner supporting device 12 clamps with the recess 34 of the tablet PC 3. The press button 122 of the inner supporting device 12 latches the clasp member 35 of the tablet PC 3. The second electrical conjunction 33 of the tablet 3 electrically connects the first electrical conjunction 13 on the inner surface 111 of the brace plate 11, and the tablet PC 3 electrically connects the keyboard 2 thereby.

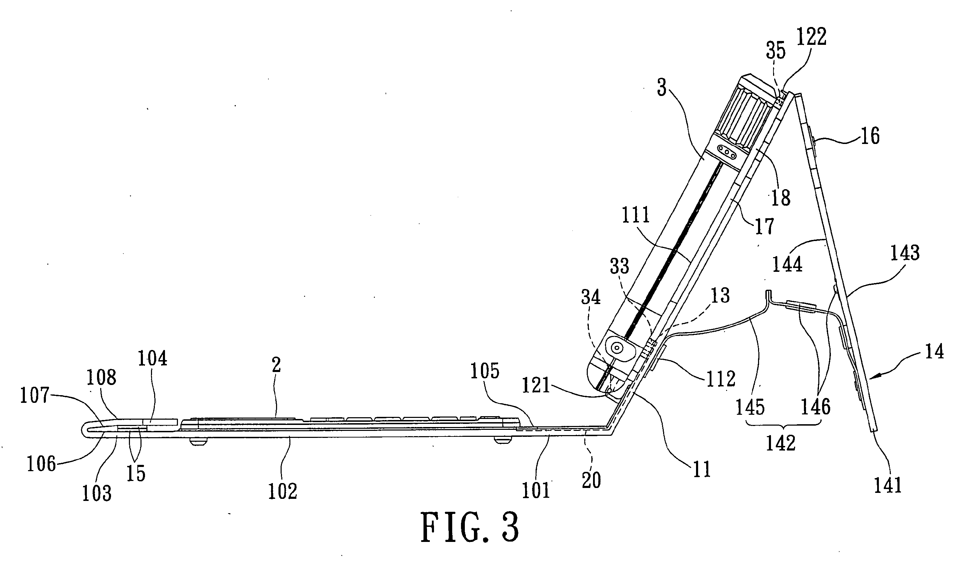

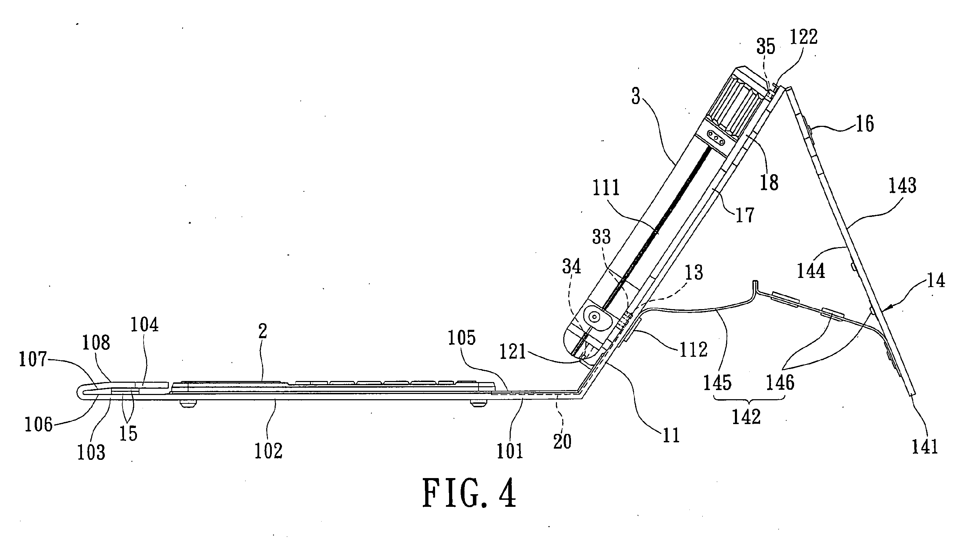

Referring to Figs. 3 and 4, in the tablet PC assembly, the foldable sheath 1 is adopted for the tablet PC 3 and the keyboard 2 to a notebook type. In addition, the retractable mechanism 142 and the outer supporting device 14 are connected between the second surface 144 of the exterior plate 141 and the outer surface 112 of the brace plate 11. The band 145 and the part-to-orientation mechanism 14 are adjusted, and an inclined angle of the brace plate 11 is changed. The screen 30 of the tablet PC 3 can provide a best view for a user. The first engaging mechanism 15 can bend the inner surface 106 of the foldable portion 103 of the foldable sheath 1 and the inner surface 107 of the clamping portion 104. When the user uses the keyboard 2, the outer surface 108 of the clamping portion 104 can comfortably support a user's wrist. Because the connection between the inner supporting device 12 and the tablet Pc 3 is so simple, the press button 122 is pressed downwardly to release the tablet PC 3.

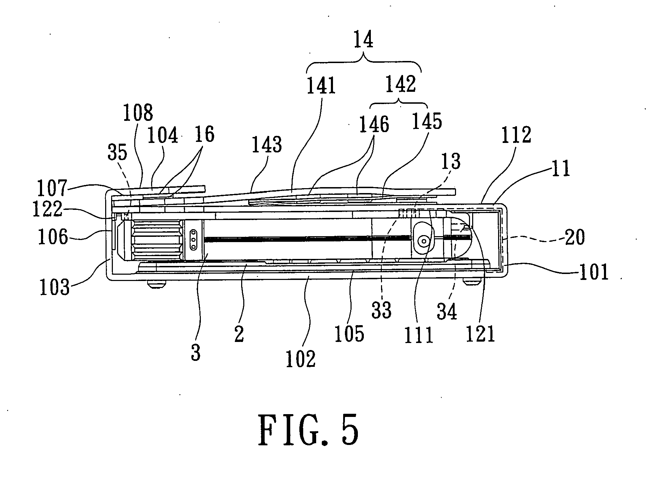

Referring Fig. 5, the foldable sheath 1 wraps the keyboard 2 and the tablet PC 3 in one piece when the tablet PC assembly is not in use. The foldable sheath 1 can be further connected by the second engaging mechanism 16. Therefore, the foldable sheath 1 provides a supporting and a wrapping function for easy use and storage of the tablet PC 3.

The present invention is characterized by:
1. The keyboard connects to the operation plate of the foldable sheath, and electrically connects to the first electrical conjunction of the brace plate. The keyboard is mounted without repeat assembly for further convenience. The keyboard is integrated with the foldable sheath; thus the keyboard is cheap but very stable.
2. The keyboard connects to the operation plate of the foldable sheath, and the tablet PC is assembled on the inner supporting device of the brace plate in a detachable manner. The second electrical conjunction of the tablet PC electrically connects to the first electrical conjunction of the brace plate; therefore, the tablet PC assembly can be changed into a notebook mode with the keyboard electrical and mechanical connection. Furthermore, the keyboard and the tablet PC can be carried after assembly.
3. The outer supporting device can adjust the inclined angle of the brace plate for providing a comfortable view.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A tablet PC assembly, comprising:
a foldable sheath including an operation plate, a brace plate connecting the operation plate, an inner supporting device, a first electrical conjunction and an outer supporting device, the inner supporting device and the first electrical conjunction being disposed on an inner surface of the brace plate, and the outer supporting device being disposed on an outer surface of the brace plate;
a keyboard mounted on an inner surface of the operation plate, and electrically connecting the first electrical conjunction on the inner surface of the brace plate; and
a tablet PC including a second electrical conjunction electrically connecting the first electrical conjunction on the inner surface of the brace plate, and arranged on the inner supporting device on the inner surface of the brace plate in a detachable manner.

2. The tablet PC assembly as claimed in claim 1, wherein the operation plate of the foldable sheath includes a middle portion, a mounting portion, a foldable portion and a clamping portion, the middle portion is connected between the brace plate and the mounting portion, the mounting portion is connected between the middle portion and the foldable portion, the foldable portion is connected between the mounting portion and the clamping portion, and the foldable sheath includes a first engaging mechanism arranged on the foldable portion and the clamping portion, and a second engaging mechanism disposed on the brace plate and the clamping portion.

3. The tablet PC assembly as claimed in claim 2, wherein the first engaging mechanism and the second engaging mechanism are magnetic.

4. The tablet PC assembly as claimed in claim 1, wherein the inner supporting device of the foldable sheath includes a hook and a press button, the tablet PC includes a recess formed on a bottom edge thereof and a clasp member disposed on a rear surface thereof, the hook engages with the recess, and the press button latches with the clasp member.

5. The tablet PC assembly as claimed in claim 4, wherein the tablet PC includes a touch-sensitive screen arranged on a front surface thereof and a conjunction wrapper pivoting on the rear surface thereof to cover the second electrical conjunction disposed on the rear surface of the tablet PC.

6. The tablet PC assembly as claimed in claim 1, wherein the foldable sheath includes an orientation plate connecting to the inner surface of the brace plate of the foldable sheath, and the inner supporting device is disposed on the orientation plate.

7. The tablet PC assembly as claimed in claim 1, wherein the outer supporting device of the foldable sheath includes an exterior plate and a retractable assembly, the exterior plate includes a first surface adjacent to the inner surface of the brace plate and a second surface opposing the first surface and adjacent to the outer surface of the brace plate, and the retractable assembly is connected between the second surface of the exterior plate and the outer surface of the brace plate.

8. The tablet PC assembly as claimed in claim 7, wherein the retractable assembly includes a band and a part-to-orientation mechanism, the band has two ends connecting the second surface of the exterior plate and the outer surface of the brace plate, respectively, and the part-to-orientation mechanism is disposed on the band and the second surface of the exterior plate.

9. The tablet PC assembly as claimed in claim 1, wherein the keyboard includes a cable electrically connecting the first electrical conjunction of the inner surface of the brace plate.
